# EUROPEAN PATENT APPLICATION

(11) **EP 3 410 267 A1**
(43) Date of publication of application: **05.12.2018**
(21) Application number: 16923137.0
(22) Date of filing: 31.12.2016
(51) Int. Cl.: G06F 3/0354, G06F 3/01

(54) **TOUCH DEVICE AND VIRTUAL REALITY SYSTEM FOR VR DEVICES**

(30) Priority: 07.12.2016 CN 201611117755
(71) Applicant: Goertek Technology Co., Ltd., Qingdao, Shandong 266104 (CN)
(72) Inventor: DU, Yang, Qingdao Shandong 266104 (CN)
(74) Representative: Maiwald Patent- und Rechtsanwaltsgesellschaft mbH
(86) International application number: PCT/CN2016/114046
(87) International publication number: WO 2018/103168

(57) **Abstract**

The present disclosure discloses a touch control apparatus for a virtual reality device and a virtual reality system. The touch control apparatus comprises a touch control panel, the touch control panel comprises a key area and a touch area, the touch area employs a touchpad of a multi-touch type. The key area is provided with a plurality of function keys, and the touch area is provided with a plurality of reference point keys. The reference point keys are for controlling size and position of a manipulating area in a displaying visual field of an external virtual reality device. The present disclosure utilizes a multiple-touch operation mode which is a relatively mature technique, and provides reference point keys for regulating the size and position of the manipulating area in the visual field, thereby assisting the user in performing function operations with high recognition rate and low cost when the line of sight is blocked, and thus improving the user experience.

## Description

### TECHNICAL FIELD

The present disclosure relates to the technical field of computer, and particularly relates to a touch control apparatus for a virtual reality device and a virtual reality system.

### BACKGROUND

Along with the gradual maturing of virtual reality (VR) technology, many virtual reality devices appear in the market. Although virtual reality devices bring the user good visual and audio experience, there is still not a good solution for the control of virtual reality devices so far. In the prior art, with respect to the traditional remote-control handle mode, it is difficult to operate and easy to perform incorrect operations when the line of sight is totally blocked by the virtual reality device. With respect to the voice control mode, it has the problems of low recognition rate, low efficiency and poor ambient interference resistance. With respect to the hand gesture recognition mode, it is still in the early stage and has the problems of high cost, large power consumption and low recognition rate; moreover, the hand gesture recognition operation easily leads to fatigue and thus a poor user experience. In conclusion, all of the control modes of virtual reality devices in the prior art have some kinds of defects, such as being difficult to operate when the line of sight is blocked, low recognition rate, high cost and poor user experience.

### SUMMARY

In view of the problems of the control modes of virtual reality devices in the prior art such as being difficult to operate when the line of sight is blocked, low recognition rate, high cost and poor user experience, the present disclosure provides a touch control apparatus for a virtual reality device and a virtual reality system, to solve or at least partially solve the above problems.

According to an aspect of the present disclosure, there is provided a touch control apparatus for a virtual reality device, the touch control apparatus comprises a touch control panel, the touch control panel comprises a key area and a touch area, and the touch area employs a touchpad of a multi-touch type; the key area is provided with a plurality of function keys, and the touch area is provided with a plurality of reference point keys; and
the reference point keys are for controlling size and position of a manipulating area in a displaying visual field of an external virtual reality device.

According to another aspect of the present disclosure, there is provided a virtual reality system, the system comprises: the touch control apparatus for a virtual reality device as stated above and a virtual reality device; and
the virtual reality device is communicatively connected to the touch control apparatus, and is for receiving control data or instructions sent by the touch control apparatus, and performing an operation corresponding to the control data or instructions.

In conclusion, the touch control apparatus for a virtual reality device of the present disclosure employs a touchpad of a multi-touch type in the touch area, which is a mature technique, so the cost is low, the operation is simple and the recognition rate is high. The touch area is provided with a plurality of reference point keys, thereby the user can voluntarily regulate the size and position of the manipulating area in the displaying visual field of an external virtual reality device according to usage scenarios, which facilitates the touch operation of the user. Additionally, the key area is provided with a plurality of function keys, which assists the user in performing function operations when the line of sight is blocked by the virtual reality device. The virtual reality system of the present disclosure employs the touch control apparatus for a virtual reality device, so it can provide the user good visual and audio experience while the touch control operation can be simpler and the user experience can be further improved. In sum, the present disclosure utilizes a multiple-touch operation mode which is a relatively mature technique, and provides reference point keys for regulating the size and position of the manipulating area in the visual field, thereby assisting the user in performing touch control operation with high recognition rate and low cost when the line of sight is blocked, and thus improving the user experience.

### BRIEF DESCRIPTION OF DRAWINGS

FIG. 1 is a schematic diagram of a touch control apparatus for a virtual reality device according to an embodiment of the present disclosure;
FIG. 2 is a schematic diagram of a touch control apparatus for a virtual reality device according to another embodiment of the present disclosure; and
FIG. 3 is a schematic diagram of a virtual reality system according to an embodiment of the present disclosure.

### DETAILED DESCRIPTION

The design concept of the present disclosure is as follows. In view of the problems of the control modes of virtual reality devices in the prior art such as being difficult to operate and easy to perform incorrect operations when the line of sight is blocked, low recognition rate, high cost and poor user experience, the present disclosure utilizes a multiple-touch operation mode which is a relatively mature technique, the touch area employs a touchpad of a multi-touch type, and the touch area is provided with a plurality of reference point keys, thereby the user can voluntarily regulate the size and position of the manipulating area in the displaying visual field of an external virtual reality device according to usage scenarios, which facilitates the touch operation of the user. Additionally, the key area is provided with a plurality of function keys, which assists the user in performing function operations when the line of sight is blocked by the virtual reality device. In order to make the objects, the technical solutions and the advantages of the present disclosure clearer, the embodiments of the present disclosure will be described below in further detail in conjunction with the drawings.

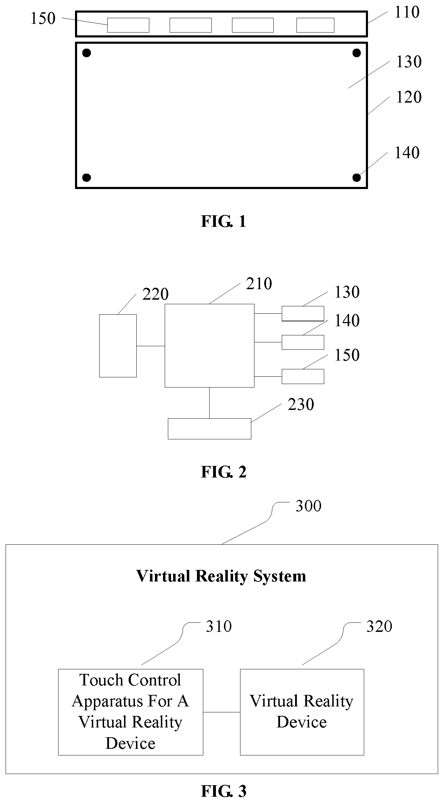

FIG. 1 is a schematic diagram of a touch control apparatus for a virtual reality device according to an embodiment of the present disclosure. As shown in FIG. 1, the touch control apparatus comprises a touch control panel, and the touch control panel comprises a key area 110 and a touch area 120. The key area 110 is provided with a plurality of function keys 150, and the corresponding functions of the function keys 150 may be set according to the demand of an external virtual reality device connected to the touch control apparatus, such as pausing/playing, switching modes, and size adjusting modes. The touch area 120 employs a touchpad 130 of a multi-touch type. As multi-touch is a mature technique, even if the line of sight is blocked, the user can freely operate with high recognition rate, simple operation, low power consumption and low cost. In order to assist the user in performing precise operation to the operation area, the manipulating area is provided in the displaying visual field of the virtual reality device, and at the same time the touch area 120 is provided with a plurality of reference point keys 140, to control size and position of a manipulating area in a displaying visual field of an external virtual reality device. When the user is controlling the manipulating area by using the touchpad 130, if the manipulating area is too small, the user moves a very long distance on the touchpad, but the movement distance of the corresponding manipulating area is not large, and the resolution is low. If the manipulating area is too large, the line of sight of the user may probably be blocked. In the present disclosure, the user may set the manipulating area in the visual field according to usage scenarios. If a high resolution is needed, the manipulating area may be set to be relatively large. If the user wants to reduce its negative influence on the content being played in the visual field, the manipulating area may be set to be relatively small to improve the user experience.

Thus, the present disclosure utilizes a multiple-touch operation mode which is a mature technique, and provides reference point keys for regulating the size and position of the manipulating area in the visual field, thereby assisting the user in performing touch control operation with high recognition rate and low cost when the line of sight is blocked, and thus improving the user experience.

FIG. 2 is a schematic diagram of a touch control apparatus for a virtual reality device according to another embodiment of the present disclosure. As shown in FIG. 2, the touch control apparatus, besides the touch control panel of the touch control apparatus of FIG. 1, further comprises a main controller 210, a communication module 220 and a power supply module 230. The touchpad 130 on the touch control panel is connected to the main controller 210 via a digital communication interface, and the function keys 150 and the reference point keys 140 are connected to the main controller 210 via an input/output interface; the power supply module 230 is for supplying power to the components; and the communication module 220 is for connecting to the external virtual reality device.

The main controller 210 is for receiving control data or instructions of the touchpad 130, the function keys 150 and the reference point keys 140, and sending the received control data or instructions to the virtual reality device via the communication module 220, so that the virtual reality device can implement an operation corresponding to the control data or instructions. For example, when receiving control data of sliding rightward in the touchpad 130, the main controller sends the control data of sliding rightward to the virtual reality device via the communication module 220, and the cursor on the virtual reality device will correspondingly slide rightward. When receiving a pause instruction in the function keys 150, the main controller sends the pause instruction to the virtual reality device via the communication module 220, and the virtual reality device will implement an operation of pausing the video being played.

In order to further reduce the power consumption of the entire touch control apparatus, the communication module may be set to be in a wireless transmission mode, such as Bluetooth mode and RF mode.

In order to assist the user in performing precise operation to the operation area, a regularly quadrangular manipulating area is provided in the visual field, and the size and position of the manipulating area are controlled by using reference point keys. In an embodiment of the present disclosure, as shown in FIG. 1, the touch area 120 is rectangular, and four reference point keys 140 are provided at four corners of the touch area 120 for controlling four vertexes of the manipulating area in the displaying visual field of the external virtual reality device. For example, when the reference point key at the top left corner is pressed, the top left corner of the manipulating area in the displaying visual field of the virtual reality device will be selected, and then the top left corner of the manipulating area can be adjusted by the sliding of the touchpad 130, thereby adjusting the size and position of the manipulating area.

Being in the process of using the virtual reality device, the line of sight of the user is blocked, and the touch control apparatus cannot be seen. In order to help the user use and distinguish the function keys, preferably, the number of the function keys in the key area is no more than four, and the size of the function keys cannot be too small. In an embodiment of the present disclosure, the number of function keys provided at the key area is no more than four, and the size of the function keys is adapted for the size of the key area.

It should be noted that, in the present embodiment, it is determined by considering usage scenarios that the number of the function keys in the key area is no more than four. However, in the present disclosure, the number of the function keys in the key area is not limited thereto. For example, the number of the function keys may be three or six.

In an embodiment of the present disclosure, functions of the function keys 150 are set according to demand of an external virtual reality device connected to the touch control apparatus. The functions include switching the operation mode of multi-touch of the touchpad, such as dragging mode, clicking mode or size adjusting mode.

In order to improve the portability of the product, in an embodiment of the present disclosure, the touch control panel has a foldable structure. The touch control panel is folded when not in use and unfolded when in use, as long as it is ensured that the touch control panel is intact and smooth when in use, thereby greatly improving the portability of the touch control apparatus.

In order to avoid the risk that the touch control apparatus is too thin to affect the posture of the user when in use, in an embodiment of the present disclosure, the touch control apparatus further comprises an air inflating structure capable of changing a thickness of a bottom of the touch control panel. The air inflating structure is provided under the touch control panel. When the touch control apparatus is used, the air inflating structure may be inflated with air to increase the bottom thickness of the touch control panel, thereby further improving the user experience.

In another embodiment of the present disclosure, a width of the touch control panel is adapted for the user's shoulder width, so that the user can operate within the entire range of the shoulder width, which makes the use more convenient.

FIG. 3 is a schematic diagram of a virtual reality system according to an embodiment of the present disclosure. The virtual reality system 300 comprises the touch control apparatus 310 as shown in Figs. 1 and 2 and a virtual reality device 320.

The virtual reality device 320 is communicatively connected to the touch control apparatus 310, and is for receiving control data or instructions sent by the touch control apparatus, and performing an operation corresponding to the control data or instructions. The communication connection may be wired or wireless, and the wireless connection may employ Bluetooth mode or RF mode.

In an embodiment of the present disclosure, the virtual reality device comprises a mobile virtual reality device or a PC virtual reality device.

It should be noted that, the embodiments of the system shown in FIG. 3 are corresponding and similar to the embodiments of the apparatus shown in Figs. 1 and 2 which have described in detail, so they are not further described here.

The virtual reality system of the present disclosure employs the touch control apparatus for a virtual reality device, so it can provide the user good visual and audio experience while the touch control operation can be simpler and the user experience can be further improved.

In conclusion, the touch control apparatus for a virtual reality device of the present disclosure employs a touchpad of multi-touch type in the touch area, which is a mature technique, so the cost is low, the operation is simple and the recognition rate is high. The touch area is provided with a plurality of reference point keys, thereby the user can voluntarily regulate the size and position of the manipulating area in the displaying visual field of an external virtual reality device according to usage scenarios, which facilitates the touch operation of the user. Additionally, the key area is provided with a plurality of function keys, which assists the user in performing function operations when the line of sight is blocked by the virtual reality device. The virtual reality system of the present disclosure employs the touch control apparatus for a virtual reality device, so it can provide the user good visual and audio experience while the touch control operation can be simpler and the user experience can be further improved. In sum, the present disclosure utilizes a multiple-touch operation mode which is a relatively mature technique, and provides reference point keys for regulating the size and position of the manipulating area in the visual field, thereby assisting the user in performing touch control operation with high recognition rate and low cost when the line of sight is blocked, and thus improving the user experience.

The above merely describes particular embodiments of the present disclosure. By the teaching of the present disclosure, a person skilled in the art can make other modifications or variations on the basis of the above embodiments. A person skilled in the art should appreciate that, the above special description is only for the purpose of better explaining the present disclosure, and the protection scope of the present disclosure should be subject to the protection scope of the claims.

## Claims

1. A touch control apparatus for a virtual reality device, wherein the touch control apparatus comprises a touch control panel,
the touch control panel comprises a key area and a touch area, the touch area employs a touchpad of a multi-touch type;
the key area is provided with a plurality of function keys, and the touch area is provided with a plurality of reference point keys; and
the reference point keys are for controlling size and position of a manipulating area in a displaying visual field of an external virtual reality device.

2. The touch control apparatus for a virtual reality device according to claim 1, wherein the touch control apparatus further comprises a main controller, a communication module and a power supply module;
the touchpad is connected to the main controller via a digital communication interface, and the function keys and the reference point keys are connected to the main controller via an input/output interface;
the power supply module is for supplying power to the parts; and the communication module is for connecting to the external virtual reality device; and
the main controller is for receiving control data or instructions of the touchpad, the function keys and the reference point keys, and sending the received control data or instructions to the virtual reality device via the communication module, to cause the virtual reality device to implement an operation corresponding to the control data or instructions.

3. The touch control apparatus for a virtual reality device according to claim 1, wherein the touch area is rectangular; and
the reference point keys include four reference point keys provided at four corners of the touch area for controlling four vertexes of the manipulating area in the displaying visual field of the external virtual reality device.

4. The touch control apparatus for a virtual reality device according to claim 1, wherein the number of the function keys provided at the key area is not more than four.

5. The touch control apparatus for a virtual reality device according to claim 1, wherein functions of the function keys are set according to demand of an external virtual reality device connected to the touch control apparatus, and include switching the operation mode of multi-touch of the touchpad.

6. The touch control apparatus for a virtual reality device according to claim 1, wherein the touch control panel has a foldable structure.

7. The touch control apparatus for a virtual reality device according to claim 1 or 6, wherein the touch control apparatus further comprises an air inflating structure capable of changing a thickness of a bottom of the touch control panel, the air inflating structure is provided under the touch control panel, and is inflated with air when the touch control apparatus is used.

8. The touch control apparatus for a virtual reality device according to claim 1, wherein a width of the touch control panel is adapted for the user's shoulder width.

9. A virtual reality system, comprising: a virtual reality device and the touch control apparatus for a virtual reality device according to any one of claims 1-8, the virtual reality device being communicatively connected to the touch control apparatus, and for receiving control data or instructions sent by the touch control apparatus and performing an operation corresponding to the control data or instructions.

10. The virtual reality system according to claim 9, wherein the virtual reality device comprises a mobile virtual reality device or a PC virtual reality device.
